# EUROPÄISCHE PATENTANMELDUNG

(11) **EP 3 251 804 A1**
(43) Veröffentlichungstag der Anmeldung: **06.12.2017**
(21) Anmeldenummer: 16172210.3
(22) Anmeldetag: 31.05.2016
(51) Int. Cl.: B25J 9/16, B25J 13/08, B25J 15/00, B25J 19/02, B66C 23/00

(54) **KRAFTUNTERSTÜTZENDE VORRICHTUNG**

(71) Anmelder: Siemens Aktiengesellschaft, 80333 München (DE)
(72) Erfinder: ENENKEL, Peter, 78462 Konstanz (DE)
(74) Vertreter: Maier, Daniel Oliver

(57) **Zusammenfassung**

Die Erfindung offenbart eine Vorrichtung (2) zur Kraftunterstützung beim Bewegen von einem Stückgut (4), umfassend ein Trägerelement (6), welches zur Aufnahme des Stückguts (4) adaptiert ist und Steuermittel (8) mittels welchen die Kraftunterstützung ansteuerbar ist. Die Vorrichtung umfasst zudem mit dem Trägerelement (6) assoziierte Sensoren (10), die geeignet sind, eine Bewegung des Stückguts (4) zu erkennen und eine Steuereinheit (12), welche die Steuermittel (8) in Antwort auf die von den Sensoren (10) erkannte Bewegung zur Kraftunterstützung beim Folgen der erfassten Bewegung ansteuert.

Die vorliegende Erfindung offenbart ein Verfahren zum Ausüben einer Kraftunterstützung beim Bewegen von einem Stückgut (4) mit einer Vorrichtung (2), welche ein Trägerelement (6) umfasst, umfassend die Verfahrensschritte eines Verursachen einer Aufnahme des Stückguts (4) durch das Trägerelement (6); und einer Auslösung der Kraftunterstützung der Vorrichtung (2) durch die Aufnahme des Stückguts (4).

## Beschreibung

Die vorliegende Erfindung betrifft eine Vorrichtung und ein Verfahren zum Ausüben einer Kraftunterstützung beim Bewegen von einem Stückgut.

Während viele Prozesse beim Bewegen von Stückgütern in der Logistik, bei Kommissioniertätigkeiten, in Flughafengepäcksortieranlagen und in Postsortieranlagen weitgehend automatisiert ablaufen, wird besonders an Endstellen noch immer manuell gearbeitet. Insbesondere eine lose Be- und Entladung von Wechselbrücken, Trailern oder anderen grossvolumigen Transporteinheiten erfolgt häufig noch manuell.

Die manuelle Be- und Entladung stellt aufgrund der Gewichtskraft der Stückgüter eine hohe körperliche Belastung dar, insbesondere bei schweren Stückgütern wie beispielsweise Gepäckstücken oder Postsendungen. Hierbei bewegt jeder Bediener täglich kumuliert mehrere Tonnen, was durch körperlichen Verschleiss bedingte Arbeitsunfähigkeit zu erhöhten Kosten führt. Eine Besonderheit bei der Beladung von Transporteinheiten mit Stückgütern ist, dass diese vorteilhaft in einer möglichst hohen Dichte und Stabilität gestapelt werden. Um Beschädigungen zu vermeiden, ist es sinnvoll, schwere Stückgüter in Bodennähe und leichtere im oberen Bereich des Containers zu platzieren. Die manuelle Be- und Entladung inhomogener Gutströme ist ein sehr komplexer Prozess, was eine Automatisierung erschwert.

Stand der Technik sind Teleskopförderer, deren Bedienung manuell über eine Steuereinheit erfolgt. Die Teleskopförderer ragen ausreichend weit in die zu be- bzw. entladende Transporteinheit hinein und sind horizontal und vertikal schwenkbar, um die Stückgüter dem Bediener zuzuführen. Nach einem automatischen Transport über den Teleskopförderer in den Container hinein müssen die Stückgüter jedoch noch von Hand aufgenommen und bewegt werden.

WO2005110907A1 stellt eine Saugschlauchhebevorrichtung und ein Verfahren zum Bewegen einer Last mit einem Saugschlauchheber vor.

WO2006128405A1 offenbart eine Hubvorrichtung, die bei einer manuellen Verlagerung von Gegenständen wenigstens eine Hand unterstützt, die den Gegenstand greift.

Die existierenden Teleskopförderer weisen meist eine geringe Verstellgeschwindigkeit auf, zudem muss durch die manuelle Bedienung der Steuereinheit ein Stückgut immer mehrfach in die Hand genommen werden, wodurch Be- und Entladung verlangsamt werden.

Die Verwendung der Saugschlauchhebevorrichtung setzt voraus, dass das zu bewegende Stückgut durch Ausüben eines Unterdrucks mit der Saugschlauchhebevorrichtung verbindbar ist. Wenn dies beispielsweise aufgrund der Oberflächenbeschaffenheit des Stückguts nicht möglich ist, muss das Stückgut ohne jegliche Unterstützung durch die Saugschlauchhebevorrichtung manuell bewegt werden. Bei einer Störung kann das Stückgut während der Bewegung herunterfallen, wodurch sowohl das Stückgut, als auch der Bediener zu Schaden kommen können. Auch muss die Saugschlauchhebevorrichtung während der Bewegung des Stückguts manuell vom Bediener gehalten werden.

Die in WO2006128405A1 offenbarte Hubvorrichtung umfasst ein zur Aufnahme eines Armes ausgestaltetes Hubelement, wobei eine Unterstützung der Bewegung der Hand dieses Armes erfolgt. Die Gewichtskraft des Stückguts wird zwar von der Hub-Vorrichtung aufgenommen, belastet jedoch dennoch zunächst den Arm und/ oder die Hand des Bedieners, insbesondere bei einer Aufnahme des Stückguts.

Da die Paketverarbeitung in den letzten Jahren ein Schwerpunkt der Logistikbranche geworden ist, hat eine bessere Lösung der oben dargestellten Situation insbesondere in Postsortieranlagen grosses Potential. Da Postsendungen und Gepäckstücke meist weder einheitlich schwere, noch einheitlich grosse Stückgüter sind, stellt dies grosse Anforderungen an die Anwendungsbreite einer Vorrichtung dar.

Der vorliegenden Erfindung liegt daher die Aufgabe zugrunde, eine verbesserte Vorrichtung mit einem breiten Anwendungsbereich und einfacher Bedienung zu ermöglichen. Diese Aufgabe wird durch die in den unabhängigen Ansprüchen beschriebenen Lösungen gelöst.

Die erfindungsgemäße Lösung sieht eine Vorrichtung zur Kraftunterstützung beim Bewegen von einem Stückgut vor, umfassend:
a) ein Trägerelement, welches zur Aufnahme des Stückguts adaptiert ist;
b) Steuermittel mittels welchen die Kraftunterstützung ansteuerbar ist;
c) mit dem Trägerelement assoziierte Sensoren, die geeignet sind, eine Bewegung des Stückguts zu erkennen; und
d) eine Steuereinheit, welche die Steuermittel in Antwort auf die von den Sensoren erkannte Bewegung zur Kraftunterstützung beim Folgen der erfassten Bewegung ansteuert.

Um eine Unterstützung des Trägerelements von einem Ankerpunkt aus bei dennoch großer Flexibilität zu ermöglichen, kann die Vorrichtung einen mit dem Trägerelement verbundenen horizontal und/ oder vertikal bewegbaren Arm umfassen, umfassend zwei oder mehr miteinander verbundene Glieder, die linear ein- und ausziehbar und/ oder rotativ beweglich ausgebildet sind.

Um das Trägerelement und/ oder den Arm besonders vorteilhaft zu positionieren und zu bedienen, insbesondere während des Auf- und Abladens des Stückguts vom Trägerelement und während des Bewegens des vom Trägerelement aufgenommenen Stückguts, können die Glieder über weitere ansteuerbare Steuermittel umfassende, rotativ beweglich ausgestaltete Gelenke miteinander verbunden sein, wobei die Gelenke mittels der Steuermittel steif und beweglich einstellbar sind. Eine steife Einstellung verhindert beim Auf- und Abladen des Stückguts auf das Trägerelement ein wegrutschen desselben. Die Gelenke ermöglichen eine reibungsarme, freie Bewegung des Armes, wobei eine horizontale Bewegung keine oder kaum Unterstützung benötigt.

Um eine Bedienung der Vorrichtung ohne aktive Bedienung eines Schalters zu ermöglichen, kann die Steuereinheit adaptiert sein, in der von den Sensoren erkannten Bewegung eine Signalbewegung zu erfassen und in Antwort auf diese Signalbewegung die Steuermittel anzusteuern. So kann der Bediener das Stückgut während des Bewegens stets mit beiden Händen führen.

Um bei schweren Stückgütern eine zu starke Belastung der Vorrichtung, insbesondere eine auf das Trägerelement wirkende, zu verhindern und/ oder die Kraftunterstützung nur dann zu verwenden, wenn dies für den Bediener vorteilhaft ist, kann die Vorrichtung, insbesondere das Trägerelement, für einen Belastungsbereich adaptiert sein und die Sensoren geeignet sein, eine auf die Vorrichtung, insbesondere auf das Trägerelement, wirkende Gewichtskraftbelastung zu quantifizieren. Die zu starke Belastung könnte die Vorrichtung beschädigen und in der Folge auch den Bediener verletzten, beispielsweise durch Herabfallen des Trägerelementes und/ oder Abbrechen des Armes, und zu einem Ausfall der Vorrichtung führen. Bei geringem Gewicht des Stückguts erfolgt auch ohne Kraftunterstützung durch die Vorrichtung keine rasche Ermüdung und übermäßige Belastung des Bedieners, so dass das Bewegen des Stückguts ohne Verwendung der Vorrichtung ergonomisch vorteilhafter ist und noch rascher erfolgen kann.

Um ein besonders kraftschonendes Aufnehmen des Stückguts vom Trägerelement zu ermöglichen, kann das Trägerelement ein ansteuerbares Fördermittel umfassen.

Um eine besonders einfache Anlieferung von einem Stückgut hin zum Trägerelement ermöglichen, kann die Vorrichtung ein ansteuerbares, mit dem Trägerelement verbundenes Anliefermittel umfassen.

Gemäß einer bevorzugten Ausführungsform kann mittels der Steuermittel das Trägerelement im Raum verschiebbar sein und die Steuermittel können von der Steuereinheit in Antwort auf die von den Sensoren erkannte Bewegung zum Folgen der erfassten Bewegung ansteuerbar sein. So benötigen sowohl eine horizontale, als auch eine vertikale Bewegung des Trägerelements nur minimalen Kraftaufwand.

Hinsichtlich eines Verfahrens wird die vorstehend genannte Aufgabe gelöst durch ein Verfahren zum Ausüben einer Kraftunterstützung beim Bewegen von einem Stückgut mit einer Vorrichtung, welche ein Trägerelement umfasst, umfassend die Verfahrensschritte:
a) Verursachen einer Aufnahme des Stückguts durch das Trägerelement; und
b) Auslösung der Kraftunterstützung der Vorrichtung durch die Aufnahme des Stückguts.

Um eine kontinuierliche Verringerung der Belastung auf den Bediener beim Bewegen des Stückguts zu ermöglichen, kann eine Bewegung des Stückguts mit Kraftunterstützung erfolgen.

Gemäß einer bevorzugten Ausführungsform kann die Bewegung des Stückguts erkannt werden und das Trägerelement kann der Bewegung des Stückguts folgen. So erfolgt stets eine optimale angreifende Kraftunterstützung. Das stetige Erkennen der Bewegung ermöglicht ein stetiges Folgen der Bewegung.

Gemäß einer bevorzugten Ausführungsform kann eine Steuerung der Vorrichtung mit einer Bewegung des Stückguts erfolgen. Auf diese Weise kann das Stückgut stets weiter mit beiden Händen des Bedieners gehalten werden und es ist keine aktive Bedienung eines Steuerelements, die mit einem Umgreifen und/ oder einer Unterbrechung des Bewegungsflusses des Bedieners verbunden wäre, erforderlich.

Gemäß einer bevorzugten Ausführungsform kann das Trägerelement einen horizontal und/ oder vertikal bewegbaren Arm mit zwei oder mehr miteinander verbundenen Gliedern umfassen, der in Abhängigkeit von der Bewegung des Stückguts starr oder beweglich einstellbar ist. Dies ermöglicht auf besonders einfache Weise Beweglichkeit und Starrheit des Arms und somit des Trägerelements.

Um einen hohen Grad an Automatisierung und somit eine besonders kosteneffiziente Durchführung des Verfahrens zu ermöglichen, kann das Trägerelement den Bewegungen des Stückguts automatisiert folgen.

Bevorzugte Ausführungsformen der Erfindung werden nachfolgend anhand der Figuren beispielsweise näher erläutert. Dabei zeigen:
- Figur 1: eine Prinzipskizze einer Vorrichtung;
- Figur 2: schematisch einen Beladevorgang unter Verwendung einer Ausgestaltung der in Figur 1 schematisch dargestellten Vorrichtung; und
- Figur 3: eine weitere Ausgestaltung der in Figur 1 dargestellten Vorrichtung mit einem mehrgliedrigen, das Trägerelement tragenden Arm.

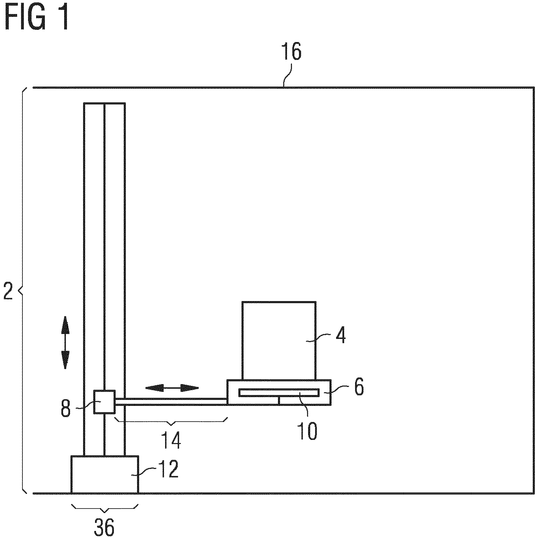

Figur 1 zeigt eine Prinzipskizze einer Vorrichtung 2 zur Kraftunterstützung beim Bewegen von einem Stückgut 4 gemäß einer bevorzugten Ausführungsform der Erfindung. Die Vorrichtung ist in einer Transporteinheit 16, beispielsweise einem Container oder einer Wechselbrücke positioniert, und umfasst ein Trägerelement 6, welches zur Aufnahme des Stückguts 4 adaptiert ist. Das hier dargestellte Trägerelement 6 ist hier als einfache Ablagefläche ausgestaltet, so dass eine Aufnahme eine einfache Auflage des Stückguts 4 auf dem Trägerelement 6 darstellt, weitere Ausgestaltungen umfassen jedoch auch Greifhandschuhe oder Sauggreifelemente. In das Trägerelement 6 eingebaut sind mit diesem assoziierte Sensoren 10, die geeignet sind, die An- bzw. Abwesenheit eines vom Trägerelement aufgenommenen Stückguts 4, sowie eine Bewegung des Stückguts 4 zu erkennen. Vorteilhafterweise sind die Sensoren 10 einzeln und/ oder kombiniert als Druck-, Gewichtskraft- und Beschleunigungssensoren ausgestaltet. Zur Ansteuerung der Kraftunterstützung umfasst die Vorrichtung 2 Steuermittel 8 sowie eine Steuereinheit 12.

Das Trägerelement 6 ist über einen in seiner Länge variierbaren Arm 14 mit einer softrobotikbasierten Hubeinheit 36 verbunden. Hierzu ist der Arm 14 teleskopartig linear ein- und ausziehbar. Der Arm 14 ist stabil genug, um Trägerelement 6 samt Stückgut 4 zu tragen. Die Hubeinheit 36 mit ihrer elektromechanischen Hubachse und der Arm 14 erlauben eine horizontale und vertikale Beweglichkeit des Trägerelements 6 samt Stückgut 4, wobei die Bewegung des Trägerelements 6 mit Hilfe der Steuermittel 8 durch Bewegung des Stückguts 4 auslösbar ist. Wesentlich zur Entlastung eines hier nicht dargestellten Bedieners 30 ist ein Angreifen der Kraftunterstützung direkt am Trägerelement 6, das Halten des Trägerelements 6 kann auf unterschiedliche Art und Weise realisiert werden. Alternativ zur Befestigung an dem Arm 14 könnte das Trägerelement 6 auch an einem anderen Aufhängungspunkt hängend, beispielsweise an einem Gestell, gestützt werden.

Die Steuereinheit 12 ist ausgestaltet, die Steuermittel 8 in Antwort auf die von den Sensoren 10 erkannte Bewegung zur Kraftunterstützung beim Folgen der erfassten Bewegung anzusteuern. Die vertikale Bewegung könnte auch mit nur wenig oder ganz ohne Kraftunterstützung manuell erfolgen, die Belastung für ein vertikales Verschieben ist bei einem flexiblem Arm 14 sehr gering. Daher ist vor allem eine Übernahme eines Hubkraftanteils durch die Hubeinheit 36 der Vorrichtung 2 entscheidend. Ein geringer Anteil des Gesamtgewichts wird von dem Bediener 30 gehalten. Die Ansteuerung der Vorrichtung 2 kann somit einzig durch das vom Trägerelement 6 zu tragende Stückgut 4 erfolgen. Die Ansteuerung erfolgt so rasch, dass die Geschwindigkeit beim Bewegen der Stückgüter mindestens der Geschwindigkeit des normalen Arbeitsflusses entspricht.

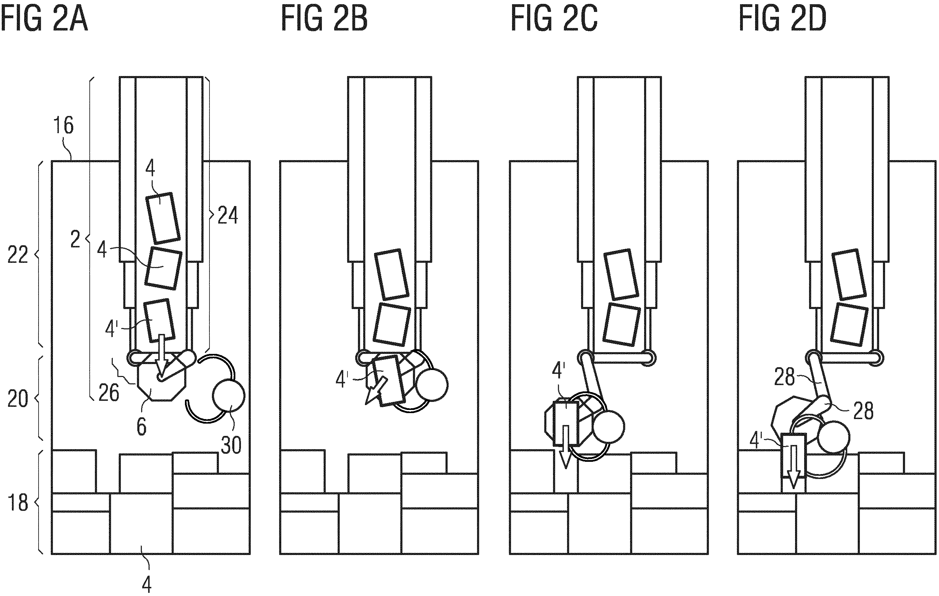

Figur 2 zeigt schematisch einen Beladevorgang unter Verwendung einer Ausgestaltung der bereits in Figur 1 schematisch dargestellten Vorrichtung 2 gemäß einer bevorzugten Ausführungsform der Erfindung. Die Vorrichtung 2 ist zumindest teilweise in der Transporteinheit 16 positioniert und umfasst zudem ein als Teleskopförderband ausgestaltetes Anliefermittel 24, um ein schnelles und unkompliziertes Anliefern der Stückgüter 4 zu ermöglichen. Das Teleskopförderband ist verlängerbar und in geringem Masse vertikal bewegbar ausgestaltet. Damit die Anlieferung keine Engstelle bei der Beladung der Transporteinheit 16 darstellt, befinden sich bereits mehrere Stückgüter 4 in einer Ladezone 18 auf dem Anliefermittel 24. Das Anliefermittel 24 ist mit dem Trägerelement 6 verbunden und ansteuerbar ausgestaltet, um einen kontrollierten Zufluss der Stückgüter 4 zu ermöglichen. Der Bediener 30 bewegt sich frei innerhalb eines Arbeitsraumes 20 und eine Stapelung der Stückgüter 4 erfolgt in einer Ladezone 18. Um dies zu ermöglichen, ist der Arm 14 mehrgliedrig ausgestaltet und weicht dem Bediener 30, insbesondere seinem Körper und seinen Armen, seitlich aus.

In Figur 2a ist zunächst dargestellt, wie der Bediener mit beiden Händen das Stückgut 4' vom Anliefermittel 24 auf das als Drehteller ausgestaltete Trägerelement 6 zieht, welches über den mehrgliedrigen Arm 14 mit dem Anliefermittel 24 verbunden und an diesem befestigt ist. Die Reichweite des Armes 14 umspannt die gesamte Breite der Transporteinheit 16. Vorzugsweise werden die Gelenke 32 stets nach Positionierung direkt vor dem Anliefermittel 24 unbeweglich eingestellt, so dass während der Aufladebewegung des Stückguts 4' der Arm 26 durch Blockierung seiner Gelenke 32 mittels der Steuermittel 8 starr eingestellt ist. Der Bediener 30 verursacht somit eine Aufnahme des Stückguts 4' durch das Trägerelement 6. Anschließend wird die Kraftunterstützung der Vorrichtung 2 durch die Aufnahme des Stückguts 4 ausgelöst. Zur Aktivierung der Vorrichtung 2 reicht somit ein Beginn der Verwendung der Vorrichtung 2 aus.

In Figur 2b ist nun dargestellt, wie der Bediener 30 das Stückgut 4' innerhalb des Arbeitsraums 20 hin zur Ladezone 18 bewegt. Diese Bewegung wird mit Hilfe der Steuereinheit 12 als Signalbewegung von den in das Trägerelement 6 integrierten, aber hier nicht dargestellten Sensoren 10 erkannt, woraufhin in Antwort auf diese Signalbewegung die Steuermittel 8 angesteuert und so die Gelenke 32 wieder beweglich eingestellt werden. Die Signalbewegung ist hier eine Winkeländerungsabfolge des Drehtellers. Der Winkel des Drehtellers wird mittels der Sensoren 10 erfasst und von der Steuereinheit 12 ausgewertet. Dank der Signalbewegung kann der Bediener 30 die Vorrichtung 2 ohne zusätzliche Bedienung eines Schalters steuern. Dies hat den Vorteil, dass so seine Hände stets am Stückgut 4' verbleiben können, was ein Herunterfallen des Stückguts 4' verhindert, und da keine eine Verzögerung bedeutende Störung des Bewegungsablaufs erfolgt, ist das Bewegen des Stückguts 4' mit Hilfe der Vorrichtung 2 besonders intuitiv, ergonomisch, schnell und somit effizient.

Anstelle einer von den Sensoren 10 detektierten Signalbewegung, die eine Ansteuerung der Steuermittel 8 auslöst, könnte eine Ansteuerung der Steuermittel 8 auch über akustische Signale oder nicht mit den Händen bedienbare Schalter, beispielsweise Fußschalter, erfolgen.

Zwischen Figur 2b und 2c erfolgt ein für den Bediener 30 nahezu kraftloses Bewegen des Stückguts 4' mit Kraftunterstützung durch die Vorrichtung 2 vom Anliefermittel 24 hin zu einer gewünschten Ablageposition. Dazu muss sich der Arm 14 der Bewegung des Bedieners anpassen und ihn möglichst nicht in seinen Bewegungen behindern. Hierzu ist die Reibung zwischen Stückgut 4' und Drehteller höher als die in den einzelnen Gelenken 32 des Armes 14. Durch einen im Drehteller eingebrachten Kraftsensor wird die Handkraft des Bedieners erfasst und in ein Bewegungssignal für die Vorrichtung 2 bzw. ihre Hubeinheit 36 umgewandelt. So kann der Bediener über das Aufbringen einer Kraft auf das Stückgut 4', also durch einfache Bewegung, die Höhe des Drehtellers anpassen. Sobald die gewünschte Abladeposition erreicht ist, versteift der Arbeiter die Gelenke 32 des Arms 14 durch eine erneute Bewegungssequenz, die von der Steuereinheit 12 als weitere Signalbewegung interpretiert wird. Die Steuereinheit 12 ist für das Erkennen einer Vielzahl an Bewegungssequenzen als Signalbewegungen mit Hilfe der Sensoren 10 adaptiert. Signalbewegungen sind insbesondere kurze, für den übrigen Be- bzw. Entladevorgang atypische Bewegungen wie beispielsweise kurze Drehungen, abruptes Bewegen, rasches Beschleunigen oder Stöße, insbesondere Haltebewegungen und/ oder Hin- und Herbewegungen und/ oder Kippen des Stückguts 4. Die Signalbewegungen werden von den Sensoren 10 detektiert.

Figur 2c und 2d zeigen ein Abladen des Stückguts 4' an der gewünschten Ablageposition bei versteiften Gelenken 32, wodurch ein Wegrutschen der Vorrichtung 2 beim Abladen verhindert wird. Das Stückgut 4' wird somit vom Drehteller geschoben, ohne dass sich der Arm 14 von der Abladeposition wegbewegt.

Nachdem das Stückgut 4' vom Drehteller geschoben wurde, sollen sich die Bremsen der Gelenke 32 des Armes 14 wieder lösen, damit der Bediener, während er sich zurück an das Teleskopförderband dreht, die Vorrichtung 2 manuell zurück in die Grundposition ziehen kann. In der Grundposition werden die Gelenke 32 automatisiert oder durch Wiederholung eines geeigneten Signals, beispielsweise einer erneuten Signalbewegung, wieder versteift. Ohne eine automatische Rückführung wird das Verletzungsrisiko des Bedieners 30, beispielsweise ausgelöst durch Kollision mit der Vorrichtung 2, verringert. Damit kein Hindernis für sperrige Stückgüter 4 existiert, ist die Vorrichtung 2 so ausgestaltet, dass der Arm 14 im eingefahrenen Zustand nicht über das Teleskopförderband ragt, wodurch eine Staubildung auf dem vorderen Ende des Teleskopförderband verhindert werden soll.

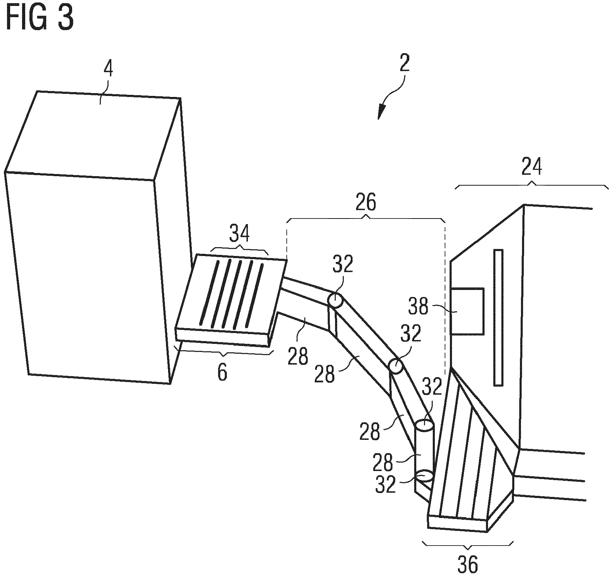

Figur 3 zeigt gemäß einer bevorzugten Ausführungsform der Erfindung eine weitere Ausgestaltung der in Figur 1 dargestellten Vorrichtung 2 mit einem mehrgliedrigen, das Trägerelement 6 tragenden Arm 14. Ankerpunkt des Trägerelements 6 ist hier wiederum ein als Teleskopförderband ausgestaltetes Anliefermittel 24 bzw. die an dieser befestigte Hubeinheit 36. Der Arm 14 ist mit dem Trägerelement 6 verbunden, stützt diesen und ist horizontal und/ oder vertikal beweglich ausgestaltet. Zudem ist der Arm 14 servomotorisch ausbalanciert und somit schwerkraftkompensiert ausgestaltet, so dass mittels der Sensoren 10 und der Steuereinheit 12 die Bewegungen, insbesondere die vertikalen Bewegungen, des Stückguts 4 erkannt werden.

Rotativ bewegliche Gelenke 32 verbinden die vier Glieder 28 des Armes 14 und ermöglichen eine rotative und durch kombinierte Gelenkverstellung lineare Beweglichkeit des Armes 14. Rotativ bewegliche Gelenke 32 sind technisch leicht realisierbare und somit kostengünstige Lösungen. In die Gelenke 32 sind ansteuerbare Steuermittel 8 integriert, mittels derer die Gelenke 32 miteinander verbunden sind und steif und beweglich einstellbar sind. Die Gelenke 32 ermöglichen auf besonders einfache Weise eine reibungsarme, freie Bewegung in horizontaler Richtung ohne den Bediener 30 zu behindern. Die Gelenke sind auch zusätzlich noch leicht in vertikaler Richtung beweglich ausgebildet um eine Feinjustierung der Höheneinstellung zu erreichen, wobei die Steuermittel 8 ausgestaltet sind, separat die horizontale und vertikale Beweglichkeit der Gelenke 32 zu steuern. Zusätzlich ist der Arm 14 mittels der Hubeinheit 36 noch vertikal beweglich ausgebildet um eine Grobeinstellung der Höhe des Trägerelements 6 zu erreichen.

Der Bediener 30 verlädt das Stückgut 4 bei Bedarf vom Teleskopförderband mit Hilfe der gewichtskraftkompensierenden Vorrichtung 2. Dazu stellt er das jeweilige Stückgut 4 auf das drehbar gelagerte Trägerelement 6. Um dies auf besonders kraft- und gutschonende Art zu ermöglichen, umfasst das Trägerelement 6 ein ansteuerbares und optional noch zusätzlich antreibbares Fördermittel 34, das als Rollenförderer, Förderband oder als Kugelrollentisch ausgestaltet sein kann. Das Fördermittel 34 ermöglicht ein besonders kraftschonendes Übergeben vom Anliefermittel 24 auf das Trägerelement 6, bei Bewegung des Trägerelements 6 selber muss das Fördermittel 34 natürlich in Bremsstellung stehen um ein Herunterfallen des Stückgutes 4 zu verhindern.

Die Vorrichtung 2, insbesondere das Trägerelement 6, ist für einen Belastungsbereich adaptiert und die Sensoren 10 sind geeignet, eine auf die Vorrichtung 2, insbesondere auf das Trägerelement 6, wirkende Gewichtskraftbelastung zu quantifizieren. Die Gewichtskraftbelastung wird von einer in das Anliefermittel 24 integrierte Anzeige 38 mit einer Farbkodierung oder quantitativ exakt angezeigt. Die Anzeige 38 kann auch an anderer Stelle positioniert werden, allerdings wird auf diese Weise ein zusätzliches Hindernis verhindert. Der Bediener 30 schaut darüber hinaus sowieso auf das Fördermittel, bevor er das Stückgut 4 auf das Trägerelement 6 auflädt. Alternativ könnte die Gewichtskraftbelastung auch erst von den Sensoren 10 des Trägerelements oder vom Arm 14 quantifiziert werden, da so keine zusätzlichen Gewichtskraftsensoren in das Anliefermittel 24 verbaut werden müssen. Allerdings könnte so die Gewichtskraftbelastung auch erst auf dem Trägerelement 6 erfolgen.

Während des Aufladens sind die Gelenke 32 steif und unbeweglich eingestellt. Die Kraftunterstützung wird nur in diesem adaptierten Belastungsbereich ausgeübt. Unterhalb des Belastungsbereichs erfolgt keine Ansteuerung der Steuermittel 8, da sie nicht erforderlich ist und einzig zu einer Verlangsamung der Beladung führen würde. Oberhalb des Belastungsbereichs erfolgt eine Ansteuerung der Steuermittel 8 derart, dass eine Beschädigung der Vorrichtung 2 durch zu große mechanische Belastungen verhindert wird. Dies kann beispielsweise ein Einfahren des Armes 14 oder ein auf den Boden Senken des Trägerelements 6 sein, um Beschädigung und/ oder Ausfall der Vorrichtung 2, beispielsweise durch Abbrechen des Armes 14, Beschädigung der Gelenke 32 oder Sensoren 10, zu verhindern. Die Vorrichtung 2 ist somit nachgiebig ausgestaltet.

Nach dem Verursachen einer Aufnahme des Stückguts 4 durch das Trägerelement 6 wird die Kraftunterstützung der Vorrichtung 2 durch die Aufnahme des Stückguts 4 selber ausgelöst.

Im Anschluss erfolgt eine Bewegung des Stückguts 4 mit Kraftunterstützung, hierzu ist ein Lösen der Gelenke 32 erforderlich. Die starre oder bewegliche Einstellung der Gelenke 32 erfolgt also in Abhängigkeit von der Bewegung des Stückguts 4. Der Bediener 30 platziert mit Hilfe der Vorrichtung 2 das Stückgut 4 nahezu kraftlos im Raum. Die vom Bediener 30 ausgelöste Bewegung des Stückguts 4 wird erkannt und das Trägerelement 4 folgt dem Stückgut 4 mit permanenter Kraftunterstützung während das Stückgut 4 bewegt wird. Der Bediener 30 bewegt das Stückgut 4 aktiv mit seinen Händen, jedoch ohne die gesamte Gewichtskraft des besagten Stückguts 4 zu tragen. Er ist daher stark entlastet und muss nur einen sehr geringen Anteil der Gewichtsbelastung tragen und dies einzig um das Stückgut 4 zur Steuerung der Vorrichtung zu bewegen. Die Kraftunterstützung durch das Trägerelement 6 liegt über 0% und unter 100%. Die Steuerung der Vorrichtung 2 erfolgt einzig durch Bewegung des Stückguts 4, die von den in die Vorrichtung integrierten Sensoren 10 erkannt wird. Mittels der Steuermittel 8 ist das Trägerelement 6 im Raum verschiebbar und die Steuermittel 8 sind von der Steuereinheit 12 in Antwort auf die von den Sensoren 10 erkannte Bewegung zum Folgen der erfassten Bewegung ansteuerbar. Auf diese Weise erfolgt nicht nur eine Hubkraftunterstützung, auch in horizontaler Richtung muss die Vorrichtung mit nur minimalem Kraftaufwand bewegt werden. Das Trägerelement 6 folgt den Bewegungen des Stückguts 4 automatisiert.

Gemäß einer bevorzugten Ausführungsform ist die Vorrichtung 2 für eine intelligente Intentionserkennung hinsichtlich der vom Bediener 30 erwünschten Bewegungen des Stückguts 4 adaptiert. Die Kraftunterstützung und die Bewegungen des Trägerelements 6 sind ebenfalls mit intelligenter Intentionserkennung unter Verwendung der Sensoren 10 und Steuermittel 8 durch die Steuereinheit 12 auslösbar. Die Steuereinheit 12 ist für eine intelligente Intentionserkennung adaptiert.

Gemäß einer weiteren Ausführungsform sind die Komponenten der Vorrichtung 2 ergonomisch optimal auf den Bediener einstellbar ausgestaltet. Besondere Wichtigkeit für die Ergonomie hat die Höhenplatzierung von Anliefermittel 24 und Trägerelement 6, sowie die Platzierung des Armes 14 derart, dass keine Bewegungseinschränkung des Bedieners 30 erfolgt.

### Bezugszeichenliste

- 2: Vorrichtung
- 4: Stückgut
- 6: Trägerelement
- 8: Steuermittel
- 10: Sensor
- 12: Steuereinheit
- 14: Arm
- 16: Transporteinheit
- 18: Ladezone
- 20: Arbeitsraum
- 22: Pufferzone
- 24: Anliefermittel
- 26: Arm
- 28: Glieder des Arms 26
- 30: Bediener
- 32: Gelenk
- 34: Fördermittel
- 36: Hubeinheit
- 38: Anzeige

## Patentansprüche

1. Vorrichtung (2) zur Kraftunterstützung beim Bewegen von einem Stückgut (4), umfassend:
a) ein Trägerelement (6), welches zur Aufnahme des Stückguts (4) adaptiert ist;
b) Steuermittel (8) mittels welchen die Kraftunterstützung ansteuerbar ist;
c) mit dem Trägerelement (6) assoziierte Sensoren (10), die geeignet sind, eine Bewegung des Stückguts (4) zu erkennen; und
d) eine Steuereinheit (12), welche die Steuermittel (8) in Antwort auf die von den Sensoren (10) erkannte Bewegung zur Kraftunterstützung beim Folgen der erfassten Bewegung ansteuert.

2. Vorrichtung (2) nach Anspruch 1, zudem umfassend einen mit dem Trägerelement (6) verbundenen horizontal und/ oder vertikal bewegbaren Arm (14), umfassend zwei oder mehr miteinander verbundene Glieder (28), die linear ein- und ausziehbar und/ oder rotativ beweglich ausgebildet sind.

3. Vorrichtung (2) nach Anspruch 2, **dadurch gekennzeichnet, dass**
die Glieder (28) über weitere ansteuerbare Steuermittel (8) umfassende, rotativ beweglich ausgestaltete Gelenke (32) miteinander verbunden sind, wobei die Gelenke (32) mittels der Steuermittel (8) steif und beweglich einstellbar sind.

4. Vorrichtung (2) nach einem der Ansprüche 1 bis 3, **dadurch gekennzeichnet, dass**
die Steuereinheit (12) adaptiert ist, in der von den Sensoren (10) erkannten Bewegung eine Signalbewegung zu erfassen und in Antwort auf diese Signalbewegung die Steuermittel (8) anzusteuern.

5. Vorrichtung (2) nach einem der Ansprüche 1 bis 4, **dadurch gekennzeichnet, dass**
die Vorrichtung (2), insbesondere das Trägerelement (6), für einen Belastungsbereich adaptiert ist und die Sensoren (10) geeignet sind, eine auf die Vorrichtung (2), insbesondere auf das Trägerelement (6), wirkende Gewichtskraftbelastung zu quantifizieren.

6. Vorrichtung (2) nach einem der Ansprüche 1 bis 5, **dadurch gekennzeichnet, dass**
das Trägerelement (6) ein ansteuerbares Fördermittel (34) umfasst.

7. Vorrichtung (2) nach einem der Ansprüche 1 bis 6, zudem umfassend
ein ansteuerbares, mit dem Trägerelement (6) verbundenes Anliefermittel (24).

8. Vorrichtung (2) nach einem der Ansprüche 1 bis 7, **dadurch gekennzeichnet, dass**
mittels der Steuermittel (8) das Trägerelement (6) im Raum verschiebbar ist und die Steuermittel (8) von der Steuereinheit (12) in Antwort auf die von den Sensoren (10) erkannte Bewegung zum Folgen der erfassten Bewegung ansteuerbar sind.

9. Verfahren zum Ausüben einer Kraftunterstützung beim Bewegen von einem Stückgut (4) mit einer Vorrichtung (2), welche ein Trägerelement (6) umfasst, umfassend die Verfahrensschritte:
a) Verursachen einer Aufnahme des Stückguts (4) durch das Trägerelement (6); und
b) Auslösung der Kraftunterstützung der Vorrichtung (2) durch die Aufnahme des Stückguts (4).

10. Verfahren nach Anspruch 9, zudem umfassend den Verfahrensschritt
einer Bewegung des Stückguts mit Kraftunterstützung.

11. Verfahren nach einem der Ansprüche 9 bis 10, **dadurch gekennzeichnet, dass**
die Bewegung des Stückguts erkannt wird und das Trägerelement der Bewegung des Stückguts folgt.

12. Verfahren nach einem der Ansprüche 9 bis 11, **dadurch gekennzeichnet, dass**
eine Steuerung der Vorrichtung mit einer Bewegung des Stückguts erfolgt.

13. Verfahren nach einem der Ansprüche 9 bis 12, **dadurch gekennzeichnet, dass**
das Trägerelement (6) einen horizontal und/ oder vertikal bewegbaren Arm (14) mit zwei oder mehr miteinander verbundenen Gliedern (28) umfasst, der in Abhängigkeit von der Bewegung des Stückguts (4) starr oder beweglich einstellbar ist.

14. Verfahren nach einem der Ansprüche 9 bis 13, **dadurch gekennzeichnet, dass**
das Trägerelement (6) den Bewegungen des Stückguts (4) automatisiert folgt.
